# EUROPEAN PATENT APPLICATION

(11) **EP 1 132 886 A1**
(43) Date of publication of application: **12.09.2001**
(21) Application number: 00963036.9
(22) Date of filing: 02.10.2000
(51) Int. Cl.: G10H 1/00, G06F 3/00

(54) **MAIL TRANSMISSION/RECEPTION SYSTEM, COMMUNICATION TERMINAL CONNECTABLE TO NETWORK, MEDIUM ON WHICH MAIL TRANSMISSION/RECEPTION PROGRAM FOR THE COMMUNICATION TERMINAL IS RECORDED**

(30) Priority: 30.09.1999 JP 28084299
(71) Applicant: Colabo Inc., Meguro-ku, Tokyo 152-0004 (JP)
(72) Inventor: KONO, Shintaro, Yokohama-shi, Kanagawa 225-0005 (JP); TERUI, Toshimitsu, Shibuya-ku, Tokyo 150-0021 (JP); HORIKAWA, Makoto, Yokohama-shi, Kanagawa 230-0033 (JP)
(74) Representative: Schwabe - Sandmair - Marx
(86) International application number: JP0006835
(87) International publication number: WO0124160

(57) **Abstract**

Sound information, in addition to text or images, is appended to an electronic mail. This sound information can be freely produced on the sending end. At the receiving end, when the received mail is opened, sound information appended to the mail is reproduced. This makes it possible to enjoy listening of sound along with viewing of images. Sound information editor is provided which can edit the sound information. Sound information is trnsreceived in encoded form. A table of musical scales, note values, rhythm, and tone are associated with code numbers, made into a table, and recorded in memory beforehand, and those code values is available on both the receiving and transmitting ends. This table is used when encoding the sound information on the transmitting end or decoding the received sound information on the receiving end.

## Description

### TECHNICAL FIELD

This invention relates to a communications device that can send and/or receive electronic mails. More particularly, this invention relates to a mail transmitting/receiving system that uses a computer network such as the Internet or intranet, a communications device that can be connected to a network, and a recording medium on which is recorded an electronic mail transmitting/receiving program to be used in the communications device.

### BACKGROUND ART

Systems have been developed recently for connecting computers equipped with electronic mail sending and receiving functions to electronic communications networks such as the Internet. In these systems, electronic mail such as text and graphics edited and produced by a mail sender apparatus is sent over the electronic communications network to a mail receiver apparatus. The files contained in the mail can be opened on the receiver apparatus making it possible to verify the contents of the information. The receiver apparatus can also become the sender apparatus and send a return electronic mail to the apparatus from which it received the mail.

By the use of an electronic mail system, necessary information can be exchanged instantaneously between the sender apparatus and the receiver apparatus. In addition, a wide selection of electronic mail softwares are now available in the market. One example is electronic mail software called "Dream Passport 2" which is electronic mail software made for the electronic game machine of the applicant called "Dreamcast." In a system in which this electronic mail software is used, when the electronic game machine is connected to the electronic communications network, it becomes possible, between electronic game machines, for one player to exchange text information he or she has produced or graphic information he or she has selected with other players.

In a communications system, moreover, users can obtain sound information. If a home page has been created, for example, the interest shown by players can be increased by adding sound information to graphic information, or appending text or graphic information to sound information. However, the sound information appended to home pages is limited simply to selecting and appending WAVE files or CDA files, and the content thereof is fixed. In electronic mail systems, on the other hand, it is now possible to digitize all kinds of audio and to exchange between the communications devices.

Conventionally, when sound information is to be exchanged, it is necessary to digitize the sound information produced by recording audio data with a recording apparatus . Accordingly, players must have hardware or software to digitize audio data.

### DISCLOSURE OF THE INVENTION

It is an object of the present invention is to provide a communications device and communications software which makes it possible to exchange audio data over electronic communications network without requiring hardware or software for digitizing the audio data.

It is another object of the present invention to make it possible to produce audio information on an operating screen of the electronic mail software. It is still another object of the present invention to simplify input operations performed by players who use the game machines as the communications devices.

The electronic mail transmitting/receiving system according to one aspect of this invention comprises at least two communications devices that can access a network; and a server which controls and manages transmission and reception of electronic mail between the communications devices and stores the electronic mail transreceived by the communications devices. Moreover, the electronic mail includes sound information in addition to text and/or graphic information. Desired sound information can be produced, in the communications devices, by a player executing necessary operations following the operating instructions on a screen.

The sound information may contain musical scales, note values, rhythm, and tone in encoded form. Furthermore, the encoded information is established on the basis of a sound information - code information table established beforehand in each of the communications devices.

Furthermore, the electronic mail transmitting/receiving system is provided with an audio playback processing unit. This audio playback processing unit reproduces voice or sound when the file containing the sound information is opened.

The communications device according to another aspect of this invention can be used as an apparatus for transmitting and receiving electronic mails. Furthermore, this communications apparatus has a sound information editor which produces, edits, and stores the sound information, and a transmission control unit which sends the sound information as attachments to the text or graphic information files.

Furthermore, the sound information editor comprises an audio playback processing unit which stores the sound information and plays back the sound information when desired. The sound information may contain musical scales, note values, rhythm, and tone in encoded form.

The communications system according to still another aspect of this invention has functions for selecting certain items from among a plurality of items on a screen and executing electronic processing corresponding to those selecteditems. This communications system comprises an analog operation unit which outputs data relating to continuous values, the plurality of items are arranged continuously in a circle or other ring shape, and a control unit which is configured such that an icon for designating certain of the plurality of items are moved continuously on the ring. When the analog operation volume is at a prescribed value, the control unit move the designated icon from a prescribed item to another item discontinuously, that is, directly.

Furthermore, in the communications system comprising a terminal apparatus configured such that a plurality of symbols are displayed on a display unit as an entry screen, and a prescribed input is made possible by an operator selecting a prescribed symbol from that entry screen, a part of the entire symbol arrangement is displayed near an input position, and control unit are comprised such that, as the input position moves, the partial input screen is also moved together therewith.

The control unit is configured so that when no input candidate symbol is present in the portion of the entire input arrangement noted above, that partial display is scrolled until that input candidate symbol is displayed.

One example of the terminal apparatus noted above is a game apparatus for use in the home. The present invention is also a recording medium whereon a program for executing the means noted above is recorded. Such recording media include ROM or RAM cartridges or the like, MD, CD, or HDD disks or the like, or memory [available] in servers used on the Internet or in personal computer communications or other communications networks.

A first invention has a plurality of communications devices capable of accessing a network; and a server for mediating the sending and receiving of electronic mail on the network between the communications devices, and storing and managing electronic mail wherein the communications devices are used. The communications devices comprise functions for producing, editing, and sending sound information in addition to text or graphic information.

Another characteristic of this invention is that therein the sound information noted above is information wherein musical scales, note values, rhythm, and tone are combined and encoded.

Another characteristic is that the encoded sound information noted above is decoded on the basis of sound information - coded information tables established beforehand in each of the communications devices.

Based on the first invention, functions are comprised for producing, editing, sending, and receiving sound information in addition to text and graphic information, wherefore the breadth wherewith electronic mail based information is sent and received can be expanded, and the intentions of a sending party can be ascertained by a receiving party not only visually but also audibly, wherefore so-called feel can be imparted to electronic mail that is otherwise dull.

With sound information that is transmitted, moreover, the data volume can be reduced by using coded information that is standardized on the sending and receiving ends.

More specifically, a table is formed by associating scales (do re mi fa...), not values (whole notes, half notes, quarter notes, ...), rhythm (slow, slightly slow, moderate, slightly fast, and fast, or, two-two time, three-three time, four-four time), and tone (piano, guitar, violin, ...) all with prescribed codes, and, on the receiving end, decoding on the basis of that table. In this way the same effects can be obtained as when actual sound information is sent.

A second invention is a communications device capable of sending and receiving electronic mail by accessing the Internet. This communications device includes a sound information editor for producing, editing, and storing sound information; a display unit which displays graphics for producing the electronic mail; a memory which stores a plurality of templates beforehand for decorating the graphics for producing the electronic mail; a selection unit which selects necessary templates from the memory; an inputting unit which inputs necessary information such as addresses; and a transmission control unit which appends sound information stored in the memory by the sound' information editor to text and graphic information input by the inputting unit and sending the same.

In this second invention, the sound information editor stores in memory the encoded information produced by musical scales, note values, rhythm, and tone being combined and encoded, and also has a table for decoding that encoded information when that encoded information has been received.

The templates for decorating the graphics are configured by card-like graphics like those used for festive occasions, stamp-like graphics with predetermined designs, and graphics representing envelope designs and graphics representing postage stamp designs for representing electronic mail so as to simulate regular mail. Those graphics are assigned to prescribed code information, and code information for the graphics selected by the selection unit are sent.

Menu screens whereon are displayed pluralities of items for producing electronic mail displayed by the display unit are arrayed in a roughly circular pattern, and associated with positions designated by a control stick that can be tilted freely in any of 360 degrees of direction.

Furthermore, in a text entry screen for producing electronic mail displayed by the display unit, some of the entry candidate text characters are displayed, [those] are sequentially displayed by scrolling, and the entry candidate display field is moved in accordance with the entry position.

Also, the communications device has functions capable of connection to a network, and is a game machine capable of executing various kinds of game programs by loading recording media for games.

Based on a second invention, sound information is produced, edited, and stored in memory after being categorized into a plurality of sound information [units] by a sound information editor, a template for mail decoration that is to be displayed by display unit is selected by selection unit and displayed, and necessary information such as addresses is input by inputting unit.

With transmission control unit, sound information is appended to text information or graphic information input by the inputting unit, and sent.

By using a communications device such as that described earlier, sound information that appeals to the hearing faculty can be appended to information that appeals to the sight faculty such as is sent by ordinary electronic mail. This sound information can be freely produced and edited.

Here, by encoding and sending sound information and/or decorative graphics, and decoding the coded information on the receiving end, the electronic mail data volume can be held down to a small volume.

The communications device in this second invention' need not be a dedicated communications device, but can double as a game machine for starting up and running game software recorded on a recording medium such as a CD-ROM. In that case, by loading a recording medium (CD-ROM or the like) whereon a program for sending and receiving electronic mail is recorded in the game machine, the game machine will be equipped with the functions of a communications device.

### BRIEF DESCRIPTION OF THE DRAWINGS

Fig. 1 is a simplified configuration diagram for an overall system relating to an embodiment of this invention;
Fig. 2 is an external view of a game machine relating to an embodiment of this invention;
Fig. 3 is a function block diagram of the game machine relating to an embodiment of this invention;
Fig. 4 is a processing flowchart relating to an embodiment of this invention;
Fig. 5 is a block diagram representing the content of mail software;
Fig. 6 is a front elevation of an electronic mail address main text entry screen;
Fig. 7 is a front elevation of a menu screen;
Fig. 8 is a flowchart of the processing by a sender apparatus;
Fig. 9 is a flowchart of the processing by a receiver' apparatus; and
Fig. 10 is a front elevation of a received envelope design screen (audible screen).

### BEST MODE FOR CARRYING OUT THE INVENTION

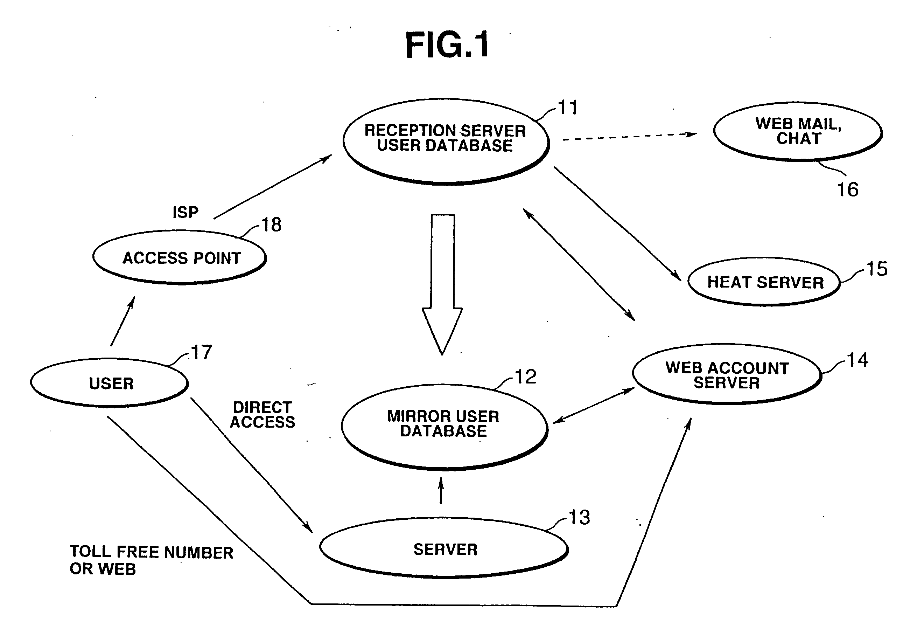

The configuration of the overall system according to an embodiment of this invention will be explained below with reference to Fig. 1.

User 17 is basically a game machine but it can be employed as a communications device . This user 17 can access the server 13 by three methods. First, the user 17 can directly access the server 13. In this method, user 17 may make a telephone call to the server 17 and establish a direct connection with the server 13.

Second, the user 17 can access the server 13 using a toll free number or the web through the web account server 14. Third, the user 17 can access the Internet through the access point 18 of an internet service provider (ISP), and then access the server 13 through the reception server user database 11. As may be seen from Fig. 1, both the electronic mail and chat are facilitated by this system.

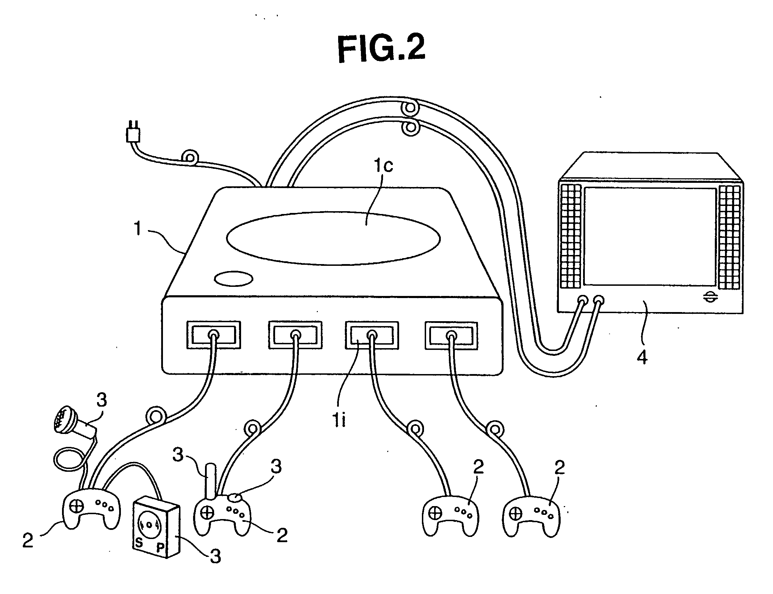

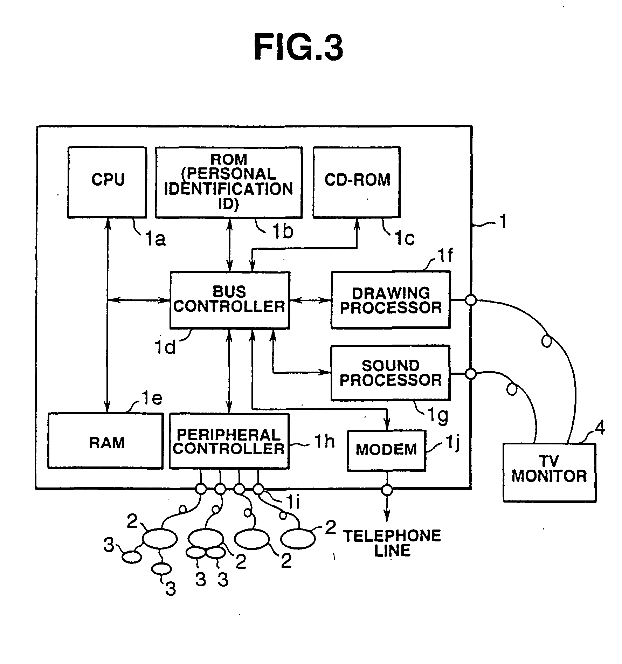

Detail explanation about the user 17 will be given with reference to Fig. 2 and Fig. 3. Fig. 2 provides an external view of the user 17 as the game machine. Fig. 3 is a function block diagram for this game machine.

The game machine 1 comprises CPU 1a that executes game programs and the like; ROM 1b that stores computer program/s and data for controlling the game machine, operating system and the like; CD-ROM unit 1c that stores game application programs and data; bus controller 1d which controls transfer of data between the CPU 1a and other components; RAM 1e which stores computer programs and data used by the CPU 1a in data processing; drawing processor 1f which generates graphic signals based on a drawing data; audio processor 1g which generates audio signals based on an audio data; and peripheral interface 1h which relays data transfers between the CPU 1a and peripheral equipment on the outside; etc. Some of the space in the RAM 1e is used as working RAM for processing peripheral data, devised to support so-called DMA operations. Graphic signals and audio signals are sent to a monitor 4 such as a television receiver, whereupon video and audio are output. The peripheral equipment is comprised of a basic peripheral device 2 and an expansion peripheral device 3 . The basic peripheral device 2 is connected through a connector li to the peripheral controller 1h, while the expansion peripheral device 3 is connected to the basic peripheral device 2.

The basic peripheral device 2 and the expansion peripheral device 3 are connected electrically (or in terms of logic structure) in parallel to the host. The basic' peripheral device may be a game controller, for example, and the expansion peripheral device 3 may be something like an audio input device, an audio output device, a light ray gun module, a vibration device, or a memory device. The game machine 1 is also equipped with a modem 1j for conducting communications over a telephone line.

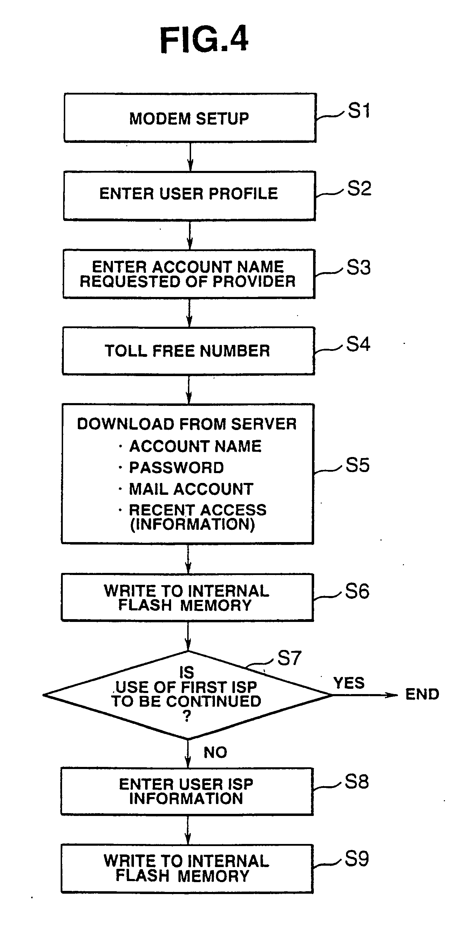

Fig. 4 is a flowchart of the operations of the game machine when it acts as the communications device. First, the communications software "Dream Passport" (made by Sega Enterprises) is loaded in the CD-ROM unit 1c of the game machine 1, a setup program for the modem 1j is run (S1), and a user profile is created by entering an address, name, and gender, etc. (S2). The account name one wishes to have with the provider is entered (S3) and a toll free telephone call is placed (S4). Thus the information and personal ID entered are sent.

Information including the account name, password, mail account, and recent access status, etc., is downloaded from the server (S5). These data are written to a flash memory in the main game machine unit (S6). An inquiry is made to the use as to whether use of the first ISP is to be continued (S7); if the answer is YES then processing is terminated, and if the answer is NO then user ISP information is input to the user (S8), and that information is written to the flash memory (S9).

Because this game machine has a built-in modem, as described above, it can be connected to the Internet in the same way as an ordinary personal computer. Electronic mail can also be sent and received using a dedicated server provided by the manufacturer of the game machine software or hardware or by the publisher of a game magazine or the like.

Electronic mail can now be sent and received by loading electronic mail sending and receiving software, namely the "Dream Passport 2" or "Dream Flyer" that constitutes the recording medium of the present invention, into the CD-ROM unit 1c of the game machine 1. ("Dream Passport 2" and "Dream Flyer" are product names for electronic mail software made for the home game machine "Dreamcast" manufactured by Sega Enterprises, Ltd.)

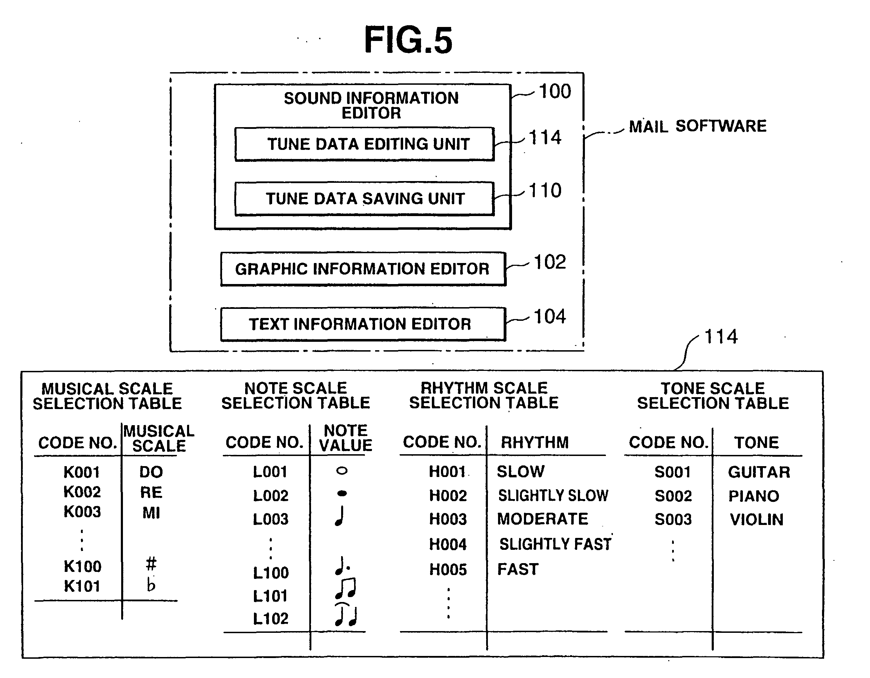

Fig. 5 shows a functional block diagram of the control operations executed by the game apparatus using the electronic mail software. The mail software comprises the text information editor 100, graphic information editor 102, and sound information editor 104.

The text information editor 100 is a processor for performing text editing for producing so-called mail (entering addresses and producing text) by making various key entries with the controller 2 of the game machine 1.

The graphic information editor 102 is a processor for' selecting graphics (stored beforehand in memory as templates) for effecting virtual displays that simulate the sending of letters and postcards by mail on a TV monitor or the like connected to the game machine 1. The sound information editor 104 is a processor for enabling the sending party to freely compose tunes. A player can also produce messages other than tunes or create desired sound effects with the editor 104.

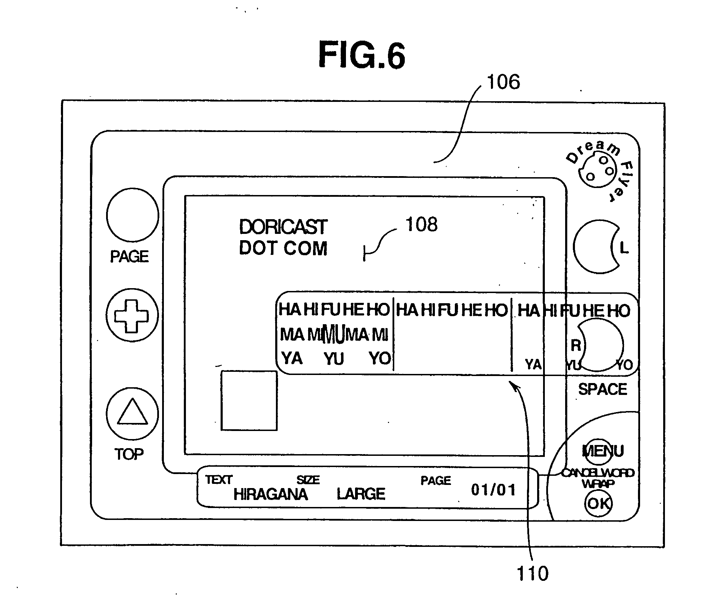

The text information editor 100 displays the electronic mail text address entry screen 106 shown in Fig. 6 on the TV monitor. In the entry position, a blinking cursor 108 is positioned, and the text next selected is entered (displayed) in this cursor 108 position. Here, in this address entry screen, a candidate window 110 for text to be selected next is displayed superimposed on the address entry screen 106.

This candidate window 110 is displayed in a position nea'r the selected text entry position and only three lines of the text in the entire area recorded beforehand in memory are displayed. When no candidate text exists in these three lines, desired text can be selected by scrolling the display. That is, the entry screen is in the vicinity of the entry position, and the range displayed as the entry screen is a portion of the total entry range. The entry range 110 moves in conjunction with movements of the entry position.

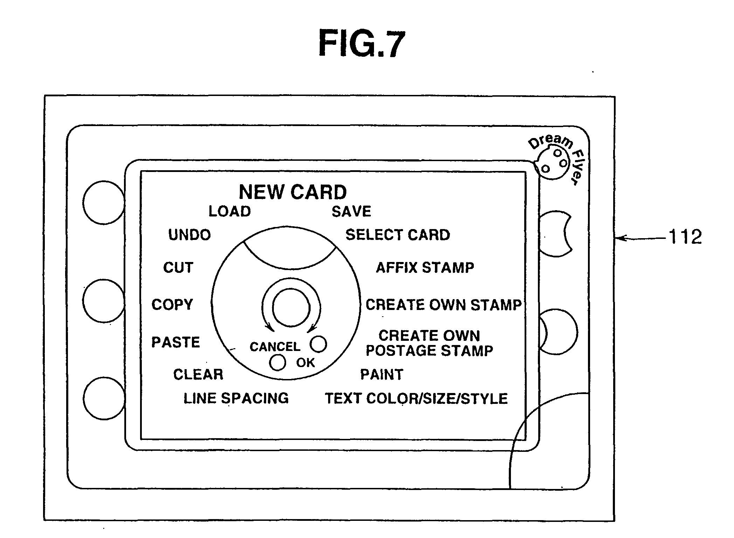

The graphic information editor 102 displays the graphic editing menu screen 112 shown in Fig. 7 on the TV monitor. ' In this graphic editing menu screen 112, a plurality of items are arrayed roughly in a circular manner. A stick graphic corresponding to an analog key (equivalent to a joy stick) provided in the controller 2 of the game machine 1 is displayed in substantially the center of the circle.

When a desired item is selected while viewing the display, and a player tilts the analog key in a direction corresponding to a desired item on the screen, a semicircular designation area is moved along the circle to that desired item, based on the angle of movement from the current reference position of the analog key.

When the graphic editing menu screen 112 is displayed, the current reference position is the position of the item selected the previous time. In Fig. 7, "new card" was selected the previous time, wherefore that becomes the current reference position.

The tilting of the analog key designates an angle subtended from the current reference position to the position tilted toward. In this case, with a current reference position at 0°, an item may be specified with an angular ratio extending to a position of tilt that has turned 360° to the same direction, or, alternatively, with the current reference position at 0°, this [turning] may be +180° or - 180°, to the left or right (clockwise or counterclockwise) . The circular area is controlled so that it turns successively from one item to the next, but when the analog key is operated so that it tilts beyond a reference angle, it is possible to jump between items.

The sound information editor 104, as shown in Fig. 5, comprises the tune data editing unit 114 and tune data saving unit 116. The tune data editing unit 114 performs selection of musical scale, note value, rhythm, and tone. The tune data editing unit 114 stores the tune data produced by the tune data editing unit 114.

The tune data editing unit 114 stores tables for each selection item (namely a scale selection table, note value selection table, rhythm selection table, and tone selection table), such that when editing is being done code numbers are selected for each.

The tune data saving unit 116 prepares tables wherein previously saved areas are secured, and produced tune data can be saved in memory based on prescribed code numbers.

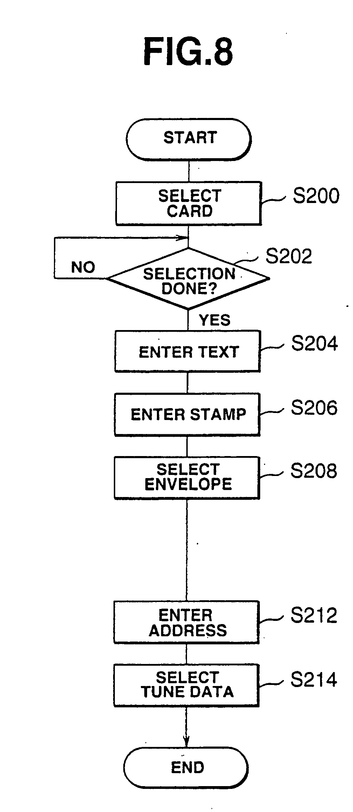

These tune data are edited and saved prior to sending electronic mail. That is, it is presumed that a number of tune data have been saved before executing the electronic mail sending routine (see flowchart in Fig. 8) described below.

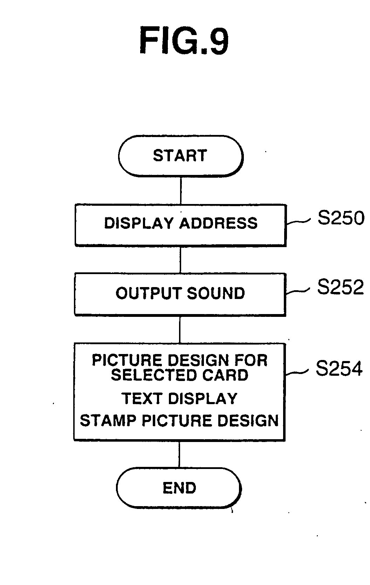

Functioning of this embodiment will now be explained with reference to the flowcharts shown in Fig. 8 and Fig. 9. It is assumed here that ID and password have already been registered with a certain server. The procedure performed to and including the sending of electronic mail after mail software has been loaded in the CD-ROM loading unit 1c in the game machine 1 are indicated.

The flowchart in Fig. 8 shows the procedure for sending an electronic mail. First, at step S200, a card is selected. This card corresponds to the background in effect when the mail is displayed on a monitor . During the Christmas season, for example, this is a picture design resembling a Christmas card, and in the New Year season this is a picture design like that of a New Year's card) . Such picture designs are stored beforehand in tabular form as templates in the ROM (the recording medium for the mail software).

After completion of selection of the card (YES at step S202), system control is given to step S204 where text of the mail is input. This is the same as ordinary electronic mail. However, if a keyboard is not connected to the game machine 1, then text candidates are displayed on the screen. If all the candidates are displayed then the screen will be almost completely filled up. Therefore, it is preferable that three lines of candidates are displayed at a time. When the desired text does not exist in the displayed candidates, then other candidates may be searched for and selected by scrolling. In this embodiment, furthermore, the display position for the three lines of displayed text is altered according to the level of text being entered so that it is always near the entry position (cursor position), thereby making text selection and entry easy. At step 204, moreover, a player can also input prescribed graphics which he or she likes.

When text entry is completed, stamp input is next performed at step 206. These stamps correspond to previously stored characters such as animals, plants, stars, etc. When a player selects a certain character, the mail software affixes that stamp at a desired position on the screen.

At step 208, a virtual envelope and postage stamp are selected. Graphics for envelopes and the like are displayed. By having the address displayed on such an envelope, the action of sending actual postal mail is simulated. In this case also, the configuration is made so that the player can select specific designs of envelopes and postage stamps from a table.

After the envelope is selected (YES at step 210 ), system control is passed to step 212 where the address is input. The address may be input in the same way as the text is input.

Tune data produced and saved beforehand are selected' at step 214. When tune data is not available, the step 214 is omitted.

In terms of the procedures for producing tune data, as already described, desired tune data are obtained when a player specifies a corresponding code combination using the game apparatus terminal. Between game apparatus terminals, tune data in the form of coded information are sent and received. Each terminal specifies the musical scale and other characteristics corresponding to the coded data sent and plays back the tune data. In the field of portable telephones, by making specifications using numbers (dial numbers), incoming-message melodies can be created that correspond to certain popular songs. Thereupon, by fetching certain numerical value combination information itself from the outside into a game machine, it is possible for a player not to have to perform a numerical value entry operation in order to create a melody.

It is also permissible to make provision so that code corresponding to sample tunes is put into table form and saved on a recording medium, whereupon a player then selects a certain sample tune. Provision may also be made so that coded information corresponding to sample tunes is fetched to the game machine from a network. Following this, the mail is sent. That is, text or graphic data to which data for producing audio has been appended can be posted to a prescribed address in a certain server.

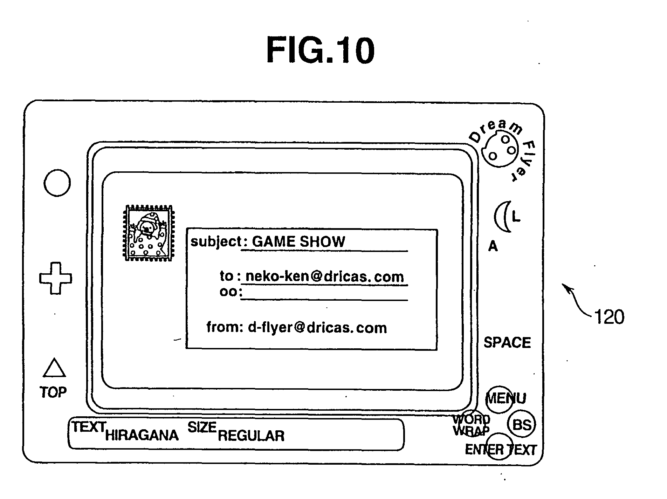

The flowchart in Fig. 9 shows the procedure for receiving the electronic mail. At step S250, graphic data present in the received mail is displayed. That is, in the case of mail sent from another game apparatus terminal, because an envelope graphic is present, when this received mail is opened, the first thing that happens is that the envelope graphic (with an address displayed thereon) 120 diagrammed in Fig. 10 is displayed.

In step S252, when a click is performed to open that envelope graphic, a text file and/or graphic file is read by the control unit of the game apparatus, text and/or graphics are displayed on the screen, and, almost simultaneously therewith, the sound information appended by the sender game apparatus is played. When this happens, because the sound information is completely encoded, at the receiving terminal, that encoded sound information is read out, a table available on the receiving end is referenced, and the corresponding sounds are reproduced.

Provision may also be made so that, after the sound playback has finished, or the receiving party has effected a certain manipulation, the picture design (including stamp/s) and text on the card in the envelope are displayed, as indicated at step S254.

Thus, with the mail software of this embodiment, sound information that can be freely produced and edited on the sending end can be sent as an attachment to ordinary mail (text and/or graphic file) . Then, on the sending end, when such mail is received, music or the like based on the sound information is output, wherefore, in addition to graphic information, free sound information can be exchanged over a communications network. In addition, because any desired sound information can be obtained by a player selecting certain codes on an operating screen of an operations terminal, no special hardware is required.

When mail is being produced on the sender game apparatus, furthermore, items on an initial menu are arrayed in a circle, and items corresponding to manipulations (tilt directions) of an analog key in a controller 2 of a game machine 1 can be selected, wherefore the desired item can be selected more quickly than in cases where items are arrayed in the vertical direction and designated with the up and down keys, etc.

Furthermore, because provision is made so that a portion (three lines) of the entry text array screen is displayed on the screen when text is being entered, and so that the displayed portion can be scrolled, difficulties such as that entry text display area occupying the entire screen, or the text characters becoming small in order to display all of the text in the prescribed area, can be eliminated.

Moreover, because provision is made so that the three lines of displayed text are always present in the vicinity of the entry position, and so that that position is made to move in correspondence with the cursor position, the entry operation can be effected in a simple and elegant way. The control unit that has been provided in each of the user (i.e. client) may be provided in the server.

### INDUSTRIAL APPLICABILITY

As explained above, according to the present invention, it is possible to provide an electronic mail transmitting/receiving apparatus, communications device, and recording medium whereon communications software is recorded, wherewith audio can be exchanged over an electronic communications network without requiring hardware or other software for digitizing the audio.

Furthermore, it is possible to provide a terminal apparatus, and a recording medium therefore, that is configured so that audio information can be produced entirely right on an operating screen of the electronic mail software . Moreover, when a game machine is used as a communications device, the input operations made by a player can be simplified. With the present invention, as described in the foregoing, sound information that appeals to the hearing faculty can be appended to the information in electronic mail that appeals to the sight faculty, and that sound information can be freely produced on the sending end. Such are the outstanding benefits provided by the present invention.

## Claims

1. An electronic mail transmitting/receiving apparatus comprising:
at least two communications devices that can access a network; and
a server which controls and manages transmission and reception of electronic mail between said communications devices and stores the electronic mail transreceived by said communications devices, wherein the electronic mail includes sound information in addition to text and/or graphic information, wherein
said communications device includes a control unit configured so that an operator can produce desired audio information by performing necessary operations following operating instructions on a screen.

2. The apparatus according to claim 1, wherein the audio information includes one or more of musical scales, note values, rhythm, and tone in encoded form.

3. The apparatus according to claim 2, wherein the audio information is established on basis of audio information - code information tables established beforehand in each of said communications devices.

4. The apparatus according to claim 1, comprising an audio playback processing unit with which, when a receiving type terminal apparatus on said network has opened a file of the electronic mail, a file comprising the audio information is opened, and the voice or sound pertaining thereto is reproduced.

5. The communications device employed in a apparatus according to any one of claims 1 to 4.

6. The communications device according to claim 5, further comprising:
an sound information editor which produces, edits, and stores the audio information; and
a transmission control unit which sends audio information obtained using said sound information editor as an attachment to the text or graphic information file.

7. The apparatus according to claim 6, wherein said sound information editor includes a storing unit which stores the information in which musical scales, note values, rhythm, and tone have been combined and encoded; and
a reproducing unit which reproduces the sound information from that encoded information when receiving the encoded information.

8. A terminal apparatus comprising:
functions for selecting a prescribed item from among a plurality of items on a screen, and executing electronic processing corresponding to that item, wherein the items are arranged continuously in a circle or other ring shape; and
an analog operation unit which outputs data relating to continuous values; and
a control unit which is configured so that an icon is made to move continuously in a ring shape in order to designate one of said plurality of items, in accordance with an operation amount of said analog operation unit.

9. The terminal apparatus according to claim 8, wherein, when the analog operation amount is at a prescribed value, said control unit cause the designated icon to move so as to jump directly from a prescribed item to another item.

10. The terminal apparatus according to claim 9, wherein said analog operation unit includes an operating lever, and said control unit is configured so as to detect angle of direction in which said operating lever is tilted, relative to a reference value, and to determine direction of movement of said icon according to that angle.

11. A terminal apparatus configured so that a plurality of symbols are displayed as an entry screen on a display unit, and a prescribed entry is made possible by an operator selecting a prescribed symbol from that entry screen, and provided with control unit in which a part of the entire symbol arrangement is displayed in vicinity of an entry position, and this part of said entry screen moves together with movement of the entry position.

12. The terminal apparatus, wherein said control unit is effected such that, when an entry candidate symbol is not present in said portion of said entire entry array, that partial display is caused to scroll until said entry candidate symbol is displayed.

13. The terminal apparatus, wherein said terminal apparatus is a game apparatus for home use.

14. A recording medium, wherein a program for implementing said means is recorded.

15. An electronic mail transmitting/receiving system comprising:
at least two communications device that can access a network; and
a server which controls and manages transmission and reception of electronic mail between said communications devices and stores the electronic mail transreceived by said communications devices, wherein the electronic mail includes sound information in addition to text and/or graphic information, wherein
said communications device includes a control unit configured so that an operator can produce desired audio information by performing necessary operations following operating instructions on a screen.
